(19) Europäisches Patentamt
European Patent Office
Office européen des brevets

(11) Veröffentlichungsnummer: **0 111 714**
**B1**

# (12) EUROPÄISCHE PATENTSCHRIFT

(45) Veröffentlichungstag der Patentschrift: **01.03.89**

(51) Int. Cl.⁴: **B 01 D 13/04**

(21) Anmeldenummer: **83111037.4**

(22) Anmeldetag: **04.11.83**

(54) **Dynamische Umkehrosmose-/Ultrafiltrationsmembranen mit guten Durchflusseigenschaften.**

(30) Priorität: **23.11.82 CH 6828/82**

(43) Veröffentlichungstag der Anmeldung: **27.06.84 Patentblatt 84/26**

(45) Bekanntmachung des Hinweises auf die Patenterteilung: **01.03.89 Patentblatt 89/9**

(84) Benannte Vertragsstaaten: **BE CH DE FR GB IT LI NL**

(56) Entgegenhaltungen:
**EP-A- 0 025 973**
**EP-A- 0 031 730**
**EP-A- 0 056 175**
**DE-A- 2 950 623**

(73) Patentinhaber: **ALIGENA AG, Freie Strasse 103, CH-4051 Basel (CH)**

(72) Erfinder: **Perry, Mordechai, Dr., 32 Sokolov Street, Petach Tikvah (IL)**
Erfinder: **Linder, Charles, Dr., 20 Derech Yavneh, Rehovot (IL)**
Erfinder: **Kotraro, Reuven, Derech Yavneh 11, Rehovot (IL)**
Erfinder: **Aviv, Gershon, Dr., 42 Burla Street, Tel Aviv (IL)**

(74) Vertreter: **Blum, Rudolf Emil Ernst et al, c/o E. Blum & Co Patentanwälte Vorderberg 11, CH-8044 Zürich (CH)**

EP 0 111 714 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung macht Gebrauch von dem Phänomen der Konzentrationspolarisation unter Druck, um einen dünnen Film eines hydrophilen Polymers auf einem Membranträger aus einem modifizierten Polymer aufzutragen, wobei dieser dünne Film einerseits chemisch mit dem Träger verbunden und andererseits selbst vernetzt ist.

Gemäß diesem Verfahren werden stabile Membranen erhalten, die gute Rückhalteeigenschaften zeigen und deren Durchflußvermögen (Flux) 2–3 mal größer ist, als bei Membranen mit vergleichbarem Rückhalt.

Die erfindungsgemäße Membran setzt sich zusammen aus einem dünnen, vernetzten hydrophilen Film, der über chemische Bindungen an eine dickere gegebenenfalls vernetzte Membran gebunden ist, die Poren mit größeren Öffnungen aufweist. Die dünne hydrophile Schicht verbessert die Rückhalteeigenschaften der Membran und erhöht die Trennkapazität bei der Trennung von z. B. einwertigen niedermolekularen Salzen von mehrwertigen Salzen oder höhermolekularen Verbindungen.

Die Vernetzung der einzelnen Bestandteile der Membran sowie auch ihre Vernetzung untereinander verleiht der Membran die angegebene Stabilität, insbesondere gegen Lösungsmittel und mechanischen Druck und verhindert außerdem ein Abtrennen einzelner Schichten innerhalb der Membran.

Die Konzentrationspolarisation ist ein bekanntes Phänomen, das bei der Ultrafiltration (UF) und Umkehrosmose (UO) sowie in der Elektrochemie auftritt. Dieses Phänomen beschreibt die Ansammlung (Konzentrierung) von gelösten, von der Membran zurückgehaltenen Molekülen auf der Konzentratseite einer Membran bei einem Osmose-/Filtrationsvorgang.

In den allermeisten Fällen ist diese Konzentrationspolarisation unerwünscht, da sie die Effizienz der Trennung (Flux/Rückhalt) beeinträchtigt. (W.F. Blatt et al. in Membrane Science and Technology, Herausgeber: J.E. Flinn, Seiten 47–97, Plenum Press, 1970).

In einigen Fällen ist es jedoch möglich dieses Phänomen zur Herstellung von Membranen zu verwenden, die einzigartige Eigenschaften aufweisen. Als geeignetes Beispiel sei die Bildung von sogenannten dynamischen Membranen genannt, wobei eine dünne Trennschicht auf einem Trägermaterial ausgebildet wird, indem man aus einer verdünnten Polymerlösung das Polymer als dünnen Film abscheidet. (D.G. Thomas, Reverse osmosis and synthetic membranes, Herausgeber: S. Sourirajan, Seiten 295–312, NRCC Publications, (1977)). Als Beispiel für ein solches Verfahren ist die Beschichtung eines porösen Kunststoffträgers mit Polyacrylsäure beschrieben (Johnson, Minturn und Wadia in J. of Electro-analytical Chem. 37, 267, 1972).

In einem anderen Beispiel wurden Polyamine mit Hilfe der Druckfiltration auf Kollodium abgeschieden, wobei eine 3,6%ige Lösung von Polyvinylamin-Hydrochlorid, die außerdem 1 molar an Kochsalz und auf einen pH-Wert von 8,7 abgepuffert ist, durch eine aktivierte Kollodiummembran filtriert und so das Polymer an das Trägermaterial adsorbiert wurde (E. Hoffer, O. Kedem, Ind. Eng. Chem. Process Des. Develop., Vol. 11, No. 2, 1972). Gemäß diesem Beispiel wurde das Eindringen des Polyvinylamins in die Poren des Trägermaterials nicht verhindert; ferner wurde die Polyvinylaminschicht auch nicht vernetzt (zur Verbesserung der Stabilität (der Rückhalteeigenschaften) der Membran ist eine solche Vernetzung jedoch angebracht).

Im Gegensatz zu diesen literaturbekannten Maßnahmen, Polymere unter Druck auf Trägermaterialien abzuscheiden, um so die Eigenschaften von Membranen und/oder Trägermaterialien zu verändern, wird in der vorliegenden Erfindung der Druck dazu benutzt, die Bildung eines Films, der aus verdünnter Lösung der auf einem Trägermaterial abgeschieden wird, sowie an dieses Material chemisch gebunden und vernetzt wird, zu kontrollieren, um Membranen mit gutem Flux und hohem Rückhalt herzustellen.

Membranen aus modifizierten Polymeren, zu deren Herstellung u. a. auch die chemische Reaktion einer Reaktivgruppen enthaltenden Polymermembran mit einem hydrophilen Polymer gehört, sind z. B. aus den europäischen Patentanmeldungen 25973, 26319, 47953 und 61424 bekannt. Das Ausgangsmaterial für Membranen, die so modifiziert sind, sind cellulosische Polymere, wie z. B. Celluloseacetate, (Co)polymere auf Basis von Acrylnitril, Polyvinylalkohole oder Polysulfone.

Das Polymer wird auf die Membranen in der Regel so aufgebracht, daß man diese in die Polymerlösung eintaucht, wobei naturgemäß nur eine unzureichende Kontrolle bezüglich der Dicke des gebildeten (abgeschiedenen) Films oder der Penetration des Polymers in die Poren der Membran ausgeübt werden kann.

Um einen besonders hohen Rückhalt (z. B. 99% für den Farbstoff der Formel (108) zu erreichen ist eine relativ hochkonzentrierte Polymerlösung (5 bis 20%) notwendig. Obwohl dieser hohe Rückhalt erreicht werden kann, sind diese Membranen nicht optimal, da die notwendige dicke Polymerschicht (notwendig um den guten Rückhalt zu erreichen) und insbesondere auch die Penetration des Polymers in die Poren der Membran, nur einen relativ geringen Durchfluß (Flux) gestatten.

Es wurde nun gefunden, daß man mit Hilfe der Konzentrationspolarisation unter Druck die Penetration der Polymeren (z. B. von Polyäthyleniminen-PEI) in die Poren einer Membran kontrollieren und insbesondere so vermindern kann, daß die Membranen neben einem guten Rückhalt auch einen hervorragenden Druckfluß aufweisen. Die erfindungsgemäß erhältlichen Membranen enthalten aufgrund dieser Maßnahmen nur sehr dünne Oberflächenfilme; diese sind außerdem chemisch an den Membranträger gebunden.

Bei den erfindungsgemäßen Membranen handelt es sich also um dynamische (dynamisch hergestellte) (Komposit-)Membranen, aus gegebenenfalls chemisch modifizierten polymeren und porösen Trägermaterialien, auf die eine dünne feinporige Membranschicht aufgebracht ist, die chemisch mit dem Träger verbunden ist.

Gegenstand der vorliegenden Erfindung ist daher ein Verfahren zur Herstellung von dynamischen Membranen auf porösen, polymeren Trägermaterialien, das dadurch gekennzeichnet ist, daß man

(a) auf dem Trägermaterial Polymere aus verdünnten wässrigen Lösungen unter Druck abscheidet, wobei die Trägermaterialien und die Polymeren reaktive Gruppen enthalten, die miteinander reagieren können, und

(b) die schichtförmig auf dem Trägermaterial abgeschiedenen Polymeren mit polyfunktionellen niedermolekularen Verbindungen vernetzt.

Weitere Gegenstände der vorliegenden Erfindung sind die verfahrensgemäß erhältlichen dynamischen Membranen sowie auch die Verwendung dieser Membranen in Ultrafiltrations/Umkehrosmose-Verfahren, z.B. bei der Reinigung und Konzentrierung von Flüssigkeiten, etwa bei der Trennung von (anorganischen) Salzen von organischen Verbindungen, die sich z.B. in einer wässrigen Lösung befinden, oder bei der Reinigung von Abwässern.

Das erfindungsgemäße Verfahren kann dazu verwendet werden, Ultrafiltrationsmembranen oder mikroporöse Membranen (Trägermembranen) mit durchschnittlichen Porengrößen von etwa 1 bis 500 µm, vorzugsweise 2 bis 200 µm so zu modifizieren, daß man Membranen mit gutem Rückhaltevermögen und ausgezeichnetem Durchfluß erhält. Die Porengröße der erfindungsgemäß modifizierten Membranen kann beispielsweise mit etwa 0,1 bis 20 µm, insbesondere 0,5 bis 5 µm angegeben werden.

Die Bildung des Membranfilms kann auch mit verdünnten wässrigen Lösungen durchgeführt werden, die das Polymer und die polyfunktionellen niedermolekularen, vorzugsweise nicht-ionische Verbindungen enthalten.

Durch das erfindungsgemäße Verfahren zur Herstellung der Membranen wird

– die Abscheidung eines dünnen (Membran)-Films aus einem Polyelektrolyten oder aus einem hydrophilen, reaktiven Polymer erreicht, ohne daß diese (in störender Menge) in die Poren des Trägermaterials eindringen (minimale Penetration);

– die Herstellung gleichmäßiger Membranfilme in geringerer Dicke erreicht, als bisher möglich;

– eine gute und gleichmäßige Vernetzung des Polyelektrolyten/des hydrophilen Polymers und damit eine verbesserte chemische/mechanische Stabilität erreicht.

Die (kontrollierte) Abscheidung des Membranfilms erfolgt aus verdünnten Polymer/Polyelektrolytlösungen unter Druck, wodurch die Dicke des Films, seine Gleichmäßigkeit und die (mögliche) Penetration in das Trägermaterial überwacht werden. Parameter, die für diese Variablen verantwortlich sind, sind z.B. die Konzentration der Polymerlösung, der angewandte Druck, die Zeit und die Größenrelation Polymerpartikel/Porengröße des Trägermaterials und der sich daraus ergebende Rückhalt des Polymers (Abweisung des hydrophilen Polymers durch das poröse Trägermaterial).

Einige Bedingungen, die für die Herstellung der erfindungsgemäßen Membranen von Bedeutung sein können, sind die folgenden:

1. Die Porengröße der Trägermembran wird vorzugsweise so gewählt, daß die Membran das Polymer, das zur Beschichtung (Filmbildung) (z.B. PEI) verwendet wird, zu etwa 98% zurückhält.

2. Das Molgewicht des Polymers soll groß genug sein, um nicht in die Poren des Trägers eindringen zu können (folgt aus (1.)).

3. Die Polymerlösung soll nur eine geringe Konzentration (z.B. vorzugsweise weniger als 1%) aufweisen. Die Polymerkonzentration in der Polymerlösung kann im Bereich von etwa 0,01 bis 5 Gew.-% liegen; Polymere mit relativ niedrigem Molekulargewicht werden im allgemeinen in höheren Konzentrationen innerhalb des angegebenen Bereichs (also nahe 5%) eingesetzt: Kettenpolymere werden in Mengen, die sich mehr im unteren Konzentrationsbereich, und kugelförmige Polymere in Mengen, die sich mehr im oberen Konzentrationsbereich befinden, eingesetzt.

4. Das Vernetzungsmittel kann teilweise oder vorzugsweise ganz zusammen mit dem Polymer (in der Polymerlösung) eingesetzt werden, wobei ein nachträglicher getrennter Vernetzungsschritt gegebenenfalls nicht nötig ist. Für die Anwendung des Vernetzungsmittels zusammen mit dem Polymer werden vorzugsweise nicht-ionische polyfunktionelle Verbindungen eingesetzt. Der Vernetzungsschritt (b) kann zusätzlich zu dieser sogenannten Vorvernetzung erfolgen (mit vorzugsweise ionischen polyfunktionellen Verbindungen) oder auch unterbleiben.

Gemäß diesem Verfahren können Membranen hergestellt werden, die einen ausgezeichneten Flux im Bereich der molekularen Ausschlußgrenzen (Trenngrenzen) von 100 bis 5000, vorzugsweise von 300 bis 2000 aufweisen. Beispielsweise sei erwähnt, daß mit bekannten Membranen für den Farbstoff der Formel (108) ein Rückhalt bis 99% bei einem Flux von 500 bis 1400 $l/m^2 \cdot d$ bei 20 bar erreicht werden kann, während mit den erfindungsgemäßen Membranen Fluxwerte von 2000–3500 $l/m^2 \cdot d$ und den gleichen Bedingungen möglich sind.

In den bekannten Verfahren zur Herstellung von modifizierten Membranen werden die Polymeren (z.B. PEI) aus relativ konzentrierten Lösungen (z.B. 10%ig) durch Selbstdiffusion auf die porösen Träger aufgebracht. Die Membranen zeigen hohen Rückhalt, jedoch relativ geringen Flux (800–1000 $l/m^2 \cdot d$). Verwendet man verdünnte Polymerlösungen (weniger als 1%ig), so erhält man durch Selbstdiffusion Membranen mit nur ungenügendem Rückhalt. Erfolgt die Anwendung der verdünnten Polymerlösungen jedoch unter Druck (mindestens 2 bar, vorzugsweise 10 bis 100 bar, und insbesondere 10 bis 20 bar), so baut sich wegen der Konzentrationspolarisation auf der Oberfläche des Trägers eine Schicht auf, deren Dicke z.B. von der Zeit der Druckeinwirkung, dem Druck selbst, der Konzentration der Polymerlösung und der Porengröße des Trägers (Zurückhaltung des Polymers) abhängt. Für diese Variablen gibt es jeweils ein Optimum, jenseits dessen ein Fluxabfall auftreten kann. Die Dicke des dynamisch hergestellten Membranfilms auf dem porösen Trägermaterial kann von der Dicke einer monomolekularen Schicht (ungefähr 0,5 bis 1 µm) bis zu etwa 500 µm, vorzugsweise bis etwa 100 µm reichen.

Die Rahmenbedingungen für die Polymerkonzentrationen können z.B. wie folgt festgestellt werden:

(i) obere Grenze: die höchste Konzentration, bei der kein Fluxabfall eintritt, wenn man eine nichtmodifizierte Membran in die Polymerlösung an angegebenen Konzentration eintaucht,

(ii) untere Grenze: die niedrigste Konzentration, mit der man unter Druck noch einen Anstieg des Rückhalts auf etwa 98% erreicht.

Die einzusetzende Menge des Polymers (z.B. PEI) hängt von der Porengröße des Trägermaterials, der Verteilung der Poren und dem Molekulargewicht des Polymers ab. Wenn z.B. eine Polyacrylnitril-UF-Membran mit einem Rückhalt von 50% für den Farbstoff der Formel (108) mit Hydroxylamin und Cyanurchlorid chemisch modifiziert wird (Einführung reaktiver Gruppen in die Membran), so wird durch Behandeln dieser Membran mit einer verdünnten PEI-Lösung eine deutliche Verschlechterung der Durchflußeigenschaften (Flux) (Reduktion etwa 10 bis 20%) nicht eintreten. Wie in Tabelle 1 gezeigt wird, sind die Fluxänderungen von Membranen, die mit PEI-Lösungen behandelt werden, die weniger als 1% Polymer enthalten, nur gering.

Tabelle 1
Flux/Rückhaltevermögen von modifizierten Polyacrylnitrilmembranen.

| Nr. | Konzentration PEI % | Flux $l/m^2 \cdot d$ | Rückhaltevermögen % |
|---|---|---|---|
| 1 | 10 | 1600 | 98,1 |
| 2 | 1 | 5860 | 45,3 |
| 3 | 0,1 | 6200 | 54,7 |
| 4 | 0,01 | 6200 | 52,0 |
| 5 | ohne | 6600 | 50,0 |

Vor der Behandlung mit den PEI-Lösungen, wurden die Polyacrylnitrilmembranen 5 Minuten bei 60 °C mit Hydroxylamin und danach 5 Minuten bei 0 °C und einem pH-Wert von 9,0 mit Cyanurchlorid umgesetzt. Testbedingungen: 6%ige wässrige Lösungen des Farbstoffs der Formel (108), 25 bar, 50 °C; Verwendung von 10 cm langen röhrenförmigen Membranen.

Als Trägermembranen, die erfindungsgemäß verwendet werden können, kommen u.a. solche aus cellulosischen Materialien, wie Cellulose oder Cellulosederivaten, z.B. Celluloseacetaten, Polyvinylalkoholen, (aromatischen) Polysulfonen, Polystyrolen oder Polyepoxyden oder Polyacrylnitrilen, sowie auch aus entsprechenden Co-, Ter-, Tetra-, Block- oder Pfropfpolymeren in Betracht. In diese Polymeren werden durch chemische Modifikation reaktive Gruppen eingeführt und ferner sind die Polymeren gegebenenfalls vorvernetzt, z.B. mit ionischen polyfunktionellen niedermolekularen Verbindungen.

Die Modifikation dieser Trägermembranen vor der eigentlichen Konzentrationspolarisation mit verdünnten Polymerlösungen kann mit polyfunktionellen Verbindungen (wie sie nachfolgend genannt werden) und einem Polymer erfolgen, das über die polyfunktionellen Verbindungen chemisch mit dem Träger verbunden ist; diese Art der Modifikation ist z.B. für cellulosische Membranen, Polyvinylalkoholmembranen, oder Membranen aus anderen Hydroxylgruppen enthaltenden Polymeren, z.B. Bis-phenol-epichlorhydrinharzen geeignet.

Membranen aus aromatischen Polysulfonen, Polyepoxyden oder Polystyrolen können analog modifiziert werden, wenn sich reaktionsfähige Gruppen (Substituenten) in den Basispolymeren (Basismembranen) befinden. Sind sie nicht vorhanden, so können sie in üblicher Weise z.B. durch Haloalkylierung (Chlormethylierung) oder Kupplung mit einer Azoverbindung (Einführung von z.B. einer Aminoarylazogruppe), gegebenenfalls kombiniert mit weiteren chemischen Reaktions(Modifikations-)schritten, in die Basismembran eingeführt werden. Weitere, dem Fachmann bekannte Arten der chemischen Modifikation sind ebenfalls möglich.

Werden Membranen aus Polyacrylnitril oder Copolymeren auf Basis von Acrylnitril zur Herstellung von Membranen verwendet, so kann man diese z.B. durch Umsetzung mit Hydroxylamin, einer polyfunktionellen Verbindung und einem Polymer modifizieren und die so erhaltene Membran dann durch Konzentrationspolarisation erfindungsgemäß weiter modifizieren.

Nachfolgend wird die vorliegende Erfindung näher erläutert, wobei man als Träger(Basis)-Membran eine Polyacrylnitrilmembran verwendet. Eine Beschränkung der Erfindung auf diesen Typ von Membranen bedeutet das jedoch nicht.

Geeignete Trägermembranen bestehen also z.B. aus Polyacrylnitril oder Copolymeren auf Basis von Acrylnitril, wobei diese in der Regel mindestens 5%, vorzugsweise mindestens 20% und besonders bevorzugt mindestens 50% (bezogen auf das Gewicht) Acrylnitrileinheiten enthalten.

Weitere geeignete Polymere (neben Polyacrylnitril) sind solche aus Alkyl($C_1$–$C_6$)-Acrylnitrilen, z.B. Methacrylnitril oder Hexylacrylnitril, Arylacrylnitrilen, z.B. Phenylacrylnitril, Halogenacrylnitrile, worin Halogen Fluor, Chlor oder Brom ist, z.B. α-Fluoracrylnitril oder α-Chloracrylnitril, und Thioacrylnitrilen.

Geeignete Comonomere, die mit Acrylnitril copolymerisiert werden können, sind Monomere mit z.B. hydrophoben, hydrophilen, polaren oder ionische Gruppen, insbesondere z.B. Vinylester mit 2

bis 18 Kohlenstoffatomen im Säureteil, insbesondere Vinylacetat, Vinyläther mit 3 bis 12 Kohlenstoffatomen, Vinylpyridin, Vinylchlorid, Styrol, Butadien, Acryl- oder Methacrylsäure oder (Meth)-acrylate, z. B. solche mit 1 bis 4 Kohlenstoffatomen im Esterteil. Ferner Maleinsäureanhydrid, 2-Aminoäthylmethacrylat und Allylverbindungen, wie z. B. Allylalkohol, Allyl- oder Methallylsulfonsäure und ihre Salze (Alkalimetallsalze), Allyl- oder Methallylhalogenide, Allylamine oder Allyl-p-Toluolsulfonate. Ebenfalls geeignet sind Terpolymere, z.B. als Acrylnitril, Styrol und Butadien (ABS-Polymere), Acrylnitril/Vinylacetat/Methacrylat oder Acrylnitril/Methylmethacrylat/Natriumallyl-sulfonat oder Tetrapolymere auf Acrylnitrilbasis.

Die Membranen können auch aus Gemischen der genannten (Co)polymeren bestehen.

Weitere Membranen, die erfindungsgemäß modifiziert werden können, sind solche, in denen mindestens einige der Nitrilgruppen der Acrylnitrileinheiten zu Carboxylgruppen hydrolysiert oder zu Aminogruppen reduziert worden sind. Ferner sind auch solche Membranen geeignet, in denen die zur Herstellung verwendeten Comonomeren (neben Acrylnitril) chemisch modifiziert sind. Die erfindungsgemäßen Membranen sollten mindestens 5% Acrylnitril enthalten, so daß die chemische Modifikation überhaupt ausgeführt werden kann. Die zur erfindungsgemäßen Modifikation benötigten Ausgangsmembranen sind kommerzielle Produkte oder sie können vom Fachmann leicht selber hergestellt werden. Entsprechende Gießlösungen und Herstellungsverfahren sind aus der technischen Literatur, insbesondere auch aus der Patentliteratur (vgl. z.B. GB-PS 1 327 990 und GB-PS 2 016 301) bekannt.

Die poröse Basis-(Träger)-membran (aus Polyacrylnitril oder Copolymeren aus Acrylnitril und äthylenisch ungesättigten Comonomeren) wird mit einer wässrigen Lösung von Hydroxylamin (2 bis 15%ig), die einen pH-Wert von 2 bis 11, vorzugsweise 6 bis 7 (z.B. eingestellt mit Natriumcarbonat) hat, bei Temperaturen von etwa 55 bis 75 °C während 3 bis 60 Minuten behandelt.

Der Grad der Bildung von Amidoximgruppen aus Nitrilgruppen kann im Bereich von 0,5 bis 30%, vorzugsweise im Bereich von 5 bis 10% liegen, wenn z.B. Polymermaterial verwendet wird, das 80% und mehr Acrylnitrileinheiten enthält.

Die polyfunktionellen Verbindungen können einerseits vor der Konzentrationspolarisation zur weiteren Modifikation der Trägermembran und andererseits auch mit dem Polymer während der Konzentrationspolymerisation eingesetzt werden. In beiden Fällen dienen sie dazu, das Polymer an die Amidoximfunktionen und/oder andere Polymere zu binden, mit denen die Trägermembran vorbehandelt wurde.

Ein typischer Reaktionsablauf für eine Umsetzung einer polyfunktionellen Verbindung, z.B. Cyanurchlorid, vor der Konzentrationspolarisation ergibt sich wie folgt:

Die mit Hydroxylamin umgesetzte Polyacrylnitrilmembran wird aus der Reaktionslösung entfernt und in eine wässrige Lösung (Suspension) der (multifunktionellen) organischen Verbindung gebracht, die z. B. 0,5 bis 5 Teile Cyanurchlorid pro einem Teil Membran enthalten kann. Die Reaktionstemperatur soll unter 4 °C, z. B. bei 0 °C gehalten werden, um eine Hydrolyse des Cyanurchlorid zu vermeiden, der pH-Wert-Bereich ist etwa zwischen 8 und 11 und die Reaktionszeit kann 1 Minute bis 5 Stunden, vorzugsweise 5 bis 30 Minuten betragen.

Als polyfunktionelle Verbindungen geeignet sind monomere Verbindungen mit vernetzenden Eigenschaften, die sowohl mit der (modifizierten) Trägermembran als auch mit dem Polymer eine chemische Bindung eingehen können. Ihre Reaktivität verdanken diese mindestens zwei funktionelle Gruppen aufweisenden Verbindungen additionsfähigen Mehrfachbindungen, Epoxidgruppen, Aziridingruppen, Aldehydgruppen, Imidatgruppen, Isocyanat- oder Isothiocyanatgruppen, ferner Hydroxylgruppen, Anhydridgruppen, Acylhalogenidgruppen sowie N-Methylolgruppen, oder als tertiäres Amin oder vorzugsweise einem als Anion, insbesondere als Halogenid abspaltbaren Substituenten, wobei diese Gruppierungen und Substituenten auch in Kombination vorkommen können und gegebenenfalls weiter substituiert sind. Als addierende Mehrfachbindungen enthalten sie beispielsweise die Gruppierungen

$$-CO-C=C-, \quad -CO-C=C- \text{ oder } -SO_2-C=C-,$$

die gegebenenfalls weiter substituiert sind. Auch die Isocyanat- oder Isothiocyanatgruppe kann zu diesen Gruppen gezählt werden. Als abspaltbare Gruppen können die Verbindungen quaternäre Ammoniumgruppen, die als tert. Amine abgespalten werden, wie zum Beispiel die Trimethylammonium- oder Pyridiniumgruppe, oder auch die Sulfoniumgruppe aufweisen. Als bevorzugte reaktionsfähige Gruppe enthalten sie jedoch Substituenten mit einem als Anion abspaltbaren Rest, vorzugsweise mit reaktiven Halogenatomen. Derartige als Anion abspaltbare Reste verdanken ihre Reaktivität zum Beispiel dem Einfluß elektrophiler Gruppen, wie der –CO– oder $-SO_2$-Gruppe in gesättigten, aliphatischen Resten. Sie verdanken ihre Reaktivität z.B. auch dem Einfluß eines quaternären Stickstoffatoms, wie in der Gruppe

$$-N^{\oplus}-CH_2CH_2Cl,$$

oder in aromatischen Resten dem Einfluß von in o- und p-Stellung stehenden elektrophilen Gruppen, beispielsweise Nitro, Kohlenwasserstoffsulfonyl- oder Kohlenwasserstoffcarbonylgruppen, oder aber der Bindung an ein Ringkohlenstoffatom, welches einem tertiären Ringstickstoffatom benachbart ist, wie in Halogentriazin- oder Halogenpyrimidinresten.

Als besonders vorteilhaft haben sich cyclische Kohlensäureimidhalogenide und vor allem mindestens zwei reaktive Substituenten enthaltende Halogendi- oder -triazinverbindungen sowie Isocyanate und Isothiocyanate erwiesen. Tetrachlorpyrimidin und vor allem Cyanurchlorid sind dabei besonders vorteilhaft.

Bei den cyclischen Kohlensäureimidhalogeniden handelt es sich vorteilhafterweise um

(A) s-Triazinverbindungen mit mindestens zwei an Kohlenstoffatomen gebundenen gleichen oder verschiedenen Halogenatomen, wie z.B. Cyanurchlorid, Cyanurfluorid, Cyanurbromid sowie um primäre Kondensationsprodukte aus Cyanurfluorid, Cyanurchlorid oder Cyanurbromid und z.B. Wasser, Ammoniak, Aminen, Alkanolen, Alkylmercaptanen, Phenolen oder Thiophenolen;

(B) Pyrimidine mit mindestens zwei reaktionsfähigen gleichen oder verschiedenen Halogenatomen, wie 2,4,6-Trichlor-, 2,4,6-Trifluor- oder 2,4,6-Tribrompyridin, die in 5-Stellung beispielsweise durch eine Alkyl-, Alkenyl-, Phenyl-, Carboxyl, Cyan-, Nitro-, Chlormethyl-, Chlorvinyl-, Carbalkoxy-, Carboxymethyl-, Alkylsulfonyl-, Carbonsäureamid- oder Sulfonsäureamidgruppe, vorzugsweise jedoch durch Halogen, wie z.B. Chlor, Brom oder Fluor weitersubstituiert sein können. Besonders geeignete Halogenpyrimidine sind 2,4,6-Tri-chlor- und 2,4,5,6-Tetrachlorpyrimidin;

(C) Halogenpyrimidincarbonsäurehalogenide, wie z.B. Dichlorpyrimidin-5- oder -6-carbonsäurechlorid;

(D) 2,3-Dihalogen-chinoxalin, -chinazolin- oder -phthalazin-carbonsäure oder -sulfonsäurehalogenide, wie 2,3-Dichlorchinoxalin-6-carbonsäurechlorid bzw. -6-sulfonsäurechlorid, 2,6-Dichlorchinazolin-6- oder -7-carbonsäurechlorid, 1,4-Dichlorphthalazin-6-carbonsäurechlorid oder -bromid;

(E) 2-Halogen-benzo-thiazol- bzw. -oxazolcarbonsäure- oder -sulfonsäurehalogenide, wie 2-Chlorbenzothiazol- bzw. -oxazol-5- oder -6-carbonsäurechlorid bzw. -5- oder -6-sulfonsäurechlorid;

(F) Halogen-6-pyridazonyl-1-alkanoylhalogenide oder -1-benzoylhalogenide, wie z.B. 4,5-Dichlor-6-pyridazonyl-1-propionyl-chlorid bzw. -1-benzoylchlorid.

Weitere mindestens zwei reaktive Substituenten aufweisende Verbindungen, sind beispielsweise

(G) Anhydride oder Halogenide aliphatischer, α,β-ungesättigter Mono- oder Dicarbonsäuren mit vorzugsweise 3 bis 5 Kohlenstoffatomen, wie Maleinsäureanhydrid, Acrylsäurechlorid, Methacrylsäurechlorid und Propionsäurechlorid;

(H) Anhydride oder Halogenide von beweglichen Halogenatomen enthaltenden, aliphatischen Mono- oder Dicarbonsäuren mit vorzugsweise 3 bis 10 Kohlenstoffatomen oder aromatischen Carbonsäuren, wie z.B. Chloracetylchlorid, β-Chlorpropionsäurechlorid, α,β-Dibrompropionsäurechlorid, α-Chlor- oder β-Chloracrylsäurechlorid, Chlormaleinsäureanhydrid, β-Chlorcrotonsäurechlorid bzw. Fluor-nitro- oder Chlor-nitrobenzoesäurehalogenide oder -sulfonsäurehalogenide, in welchen das Fluor- bzw. das Chloratom in o- und/oder p-Stellung zu der Nitrogruppe steht;

(I) Carbonsäure-N-methylolamide oder reaktionsfähige, funktionelle Derivate dieser Methylolverbindungen. Als Carbonsäure-N-methylolamide kommen vor allem N-Methylolchloracetamid, N-Methylol-bromacetamid, N-Methylol-α,β-dichlor- oder dibrompropionamid, N-Methylol-acrylamid, N-methylol-α-chlor- oder -α-bromacrylamid in Betracht. Als reaktionsfähige Derivate der Carbonsäure-N-methylolamide kommen beispielsweise die entsprechenden N-Chlormethyl- oder N-Brommethylamide in Frage;

(J) gegebenenfalls verätherte N-Methylolharnstoffe oder N-Methylolmelamine, wie z.B. N,N-Dimethylolharnstoff, N,N-Dimethylolharnstoffdimethyläther, N,N'-Dimethyloläthylen- oder propylenharnstoff, 4,5-Dihydroxy-N,N'-di-methylol-äthylenharnstoff oder -dimethyläther bzw. Di- bis Hexamethylolmelamine, Trimethylolmelamindimethyläther, Pentamethylolmelamin-di- bis -trimethyläther, Hexamethylolmelamin-penta- oder -hexamethyläther;

(K) Kondensationsprodukte von mindestens eine phenolische Hydroxylgruppe aufweisenden Diarylalkanen mit Halogenhydrinen, z.B. das Diepoxid aus 2,2-Bis(4'-hydroxyphenyl)-propan und Epichlorhydrin, sowie auch Glycerin-triglycidäther und ferner entsprechende Di-aziridine;

(L) Di-aldehyde, wie z.B. Glutar- oder Adipinaldehyd;

(M) Diisocyanate oder Diisothiocyanate, wie z.B. Alkylen($C_2$–$C_4$) Diisocyanate, insbesondere Äthylendiisocyanat, Phenylen- oder Alkyl($C_2$–$C_4$)-substituierte Phenylendiisocyanate, wie z.B. Phenylen-1,4-Diisocyanat oder Toluol-2,4-diisocyanat, ferner Phenylendiisothiocyanate, wie z.B. Phenylen-1,4-diisothiocyanat;

(N) Weitere reaktive Verbindungen, wie Trisacryloly-hexahydro-s-triazin, Epoxide oder Aziridine.

Hydrophile Polymere, die in verdünnten Lösungen während der Konzentrationspolarisation oder gegebenenfalls vor diesem Schnitt eingesetzt werden, um die Träger(Basis)-Membran zu modifizieren, sind z.B. solche Polymere, die aliphatische oder aromatische Aminogruppen enthalten, wobei diese primär, sekundär oder tertiär sein können; ferner können diese Polymeren auch Hydroxy- oder Thiogruppen aufweisen. Beispiele solcher Polymerer sind Polyäthylenimin (M.G. 150 bis 1 000 000), teilweise alkyliert (z.B. mit Methyljodid) oder andersweitig modifiziert, Polyvinalalkohol gegebenenfalls teilweise verestert, (M.G. 2000–200 000), Cellulosederivate, wie Äthylcellulose, Carboxymethylcellulose, Hydroxymethylcellulose, Hydroxyäthylcellulose, ferner Polyvinylanilin (M.G. 200 bis 2 000 000), Polybenzylamin, Polyvinylamin (M.G. 1000 bis 2 000 000), Polyvinylmerkaptan, Polyvinylimidazolin, aminomodifizierte Polyepihalogenhydrine (US-PS 1 558 807), Polydiallylaminderivate und Piperidinringe enthaltende Polymere (GB-PS 2 027 614), Kondensationsprodukte aus Dicyandiamid, Formaldehyd und Amin- oder Ammoniumsalzen (Ammoniumchlorid) (US-PS 3 290 310), Aminopolysulfone, Aminopolyarylenoxide (amino-methyliertes Polyphenylenoxid) und Polymere mit hydrophilen Aminogruppen (EP 8945), Polymere aus 2-Hydroxyäthyl- oder 2-Aminoäthylmethacrylat, Polyamido-polyaminepichlorhydrin-Umsetzungsprodukte, Co-, Block- oder Pfropfpolymerisate aus diesen Monomeren und/oder Polymeren sowie weiteren, insbesondere ionische Gruppen

$$(-SO_3^{\ominus}, -COO^{\ominus}, -\overset{\oplus}{N}R_4)$$

enthaltenden Monomeren und/oder Polymeren. Beispiele hierfür sind die Copolymeren aus Styrolsulfonat (Natriumsalz)/Vinylanilin, 2-Aminoäthylmethacrylat/Acrylsäure, Vinylanilin/Vinylbenzyltrimethylammoniumchlorid oder Vinylamin/Vinylsulfonat.

Bevorzugte Komponenten sind Polyvinylalkohole, Cellulosederivate, Polyvinylamine oder Polyvinylaniline und insbesondere die polyaliphatischen (acylischen oder cyclischen) Polyalkylenimine (Polyäthylenimine) sowie auch die zuvor beispielshaft genannten Copolymeren.

Die Molgewichte der Polyäthylenimine (PEI) können wie angegeben im Bereich von 150 bis 2 000 000 liegen. Vorzugsweise beträgt ihr Molekulargewicht 1000 bis 200 000 und insbesondere 50 000 bis 200 000.

Wasser ist das bevorzugte Lösungsmittel für die hydrophilen Polymeren, jedoch können durch niedere Alkohole oder Ketone, gegebenenfalls im Gemisch mit Wasser eingesetzt werden. Die Polymerkonzentration in diesen Lösungsmitteln liegt zum Beispiel im Bereich von 0,01 bis 5 Gew.-%, wobei als bevorzugte Bereiche 0,01 bis 2% bzw. 0,01 bis 1% zu nennen sind. Diese Angaben beziehen sich auf den Konzentrationspolarisationsschritt. Für die gegebenenfalls davor liegende Beschichtung der Trägermembran (um z.B. die Trenngrenzen zu verkleinern) mit den gleichen Polymeren sind Polymerkonzentrationen von etwa 2 bis 10 Gew.-% geeignet.

Der Temperaturbereich hängt von der Reaktivität der Reaktanten ab; er liegt zwischen etwa −20 und +80 °C, vorzugsweise zwischen 0 und 25 °C.

Der pH-Wert kann im Bereich von 7 bis 12 und vorzugsweise im Bereich von 8 bis 10 liegen.

Geeignete Membranen auf Basis von modifizierten Polyacrylnitrilen, auf die unter Druck ein dünner Membranfilm aufgebracht werden kann, sind z.B.

(A) Polyacrlynitrilmembranen, die mit Hydroxylamin, Cyanurchlorid und PEI umgesetzt sind und anschließend ausgiebig gewaschen worden sind.

(B) Polyacrylnitrilmembranen, die mit Hydroxylamin umgesetzt worden sind.

(C) Polyacrylnitrilmembranen, die mit Hydroxylamin und Cyanurchlorid umgesetzt worden sind.

Andere Trägermembranen mit reaktiven Gruppen sind die weiter obengenannten, wobei insbesondere aminosubstituierte, chlormethylierte oder aminomethylierte Polysulfone, ferner Celluloseacetate und Bisphenol-Epoxid-Addukte zu erwähnen sind.

Die Polymerlösungen können gegebenenfalls die polyfunktionellen Verbindungen enthalten; dies ist z.B. von der Reaktivität der Membranen abhängig. So können z.B. die Polymerlösungen für die Behandlung der Membranen (A) und (B) polyfunktionelle Verbindungen enthalten, z.B. Cyanurchlorid, und zwar in einer Konzentration von etwa 0,5 bis 2,0 mMol/l, vorzugsweise von etwa 0,1 bis 0,9 mMol/l.

Die polyfunktionellen Verbindungen dienen dazu, das Polymer an die (modifizierte) Trägermembran zu binden und auch (durch Vernetzung) das Molekulargewicht des Polymers zu erhöhen.

Die Membran (C) enthält andererseits ausreichend reaktive Gruppen, so daß eine Verwendung von polyfunktionellen Verbindungen gleichzeitig mit der Bildung des dünnen Membranfilms nicht nötig ist, wobei es jedoch auch in diesem Fall empfehlenswert sein kann, eine polyfunktionelle Verbindung, z.B. zur Vergrößerung des Molekulargewichts des Polymers, mitzuverwenden.

Anschließend an die Polymerabscheidung durch Konzentrationspolymerisation erfolgt eine Vernetzung des Membranfilms mit z.B. vorzugsweise anionischen Vernetzern, insbesondere anionischen Reaktivfarbstoffen.

Der während der Konzentrationspolarisation anzuwendende Druck kann in einem weiten Bereich schwanken und liegt in der Regel im Bereich von 2 bis 100 bar. Membranen mit sehr guten Eigenschaften (Rückhalt, Flux) werden erhalten, wenn man im Druckbereich über 10 bar arbeitet, während unter 10 bar die Membranen in der Regel ein nicht ausreichendes Rückhaltevermögen aufweisen. Der Druck ist natürlich auch von der Polymerkonzentration und der Reaktionszeit abhängig. So wendet man bei PEI-Konzentrationen von weniger als 1% und Reaktionszeiten von weniger als 30 Minuten, vorteilhaft einen Druck von mehr als 10 bar an, wobei bei höheren Drücken die Reaktionszeit verkürzt werden kann. Die bevorzugten Druckbereiche können mit 10 bis 100 bzw. 10 bis 30 bar angegeben werden. Geringere Drükke können dann angewendet werden, wenn die Polymerkonzentration höher ist und längere Reaktionszeiten vorgesehen sind.

Die Reaktionszeit kann im Bereich von 10 Sekunden bis zu 4 Stunden liegen, wobei der Bereich von 10 bis 60 Minuten bevorzugt ist.

Der dünne, auf der porösen Trägermembran abgeschiedene Membranfilm wird anschließend mit polyfunktionellen nicht-ionischen (bereits genannt) oder vorzugsweise ionischen Verbindungen vernetzt und/oder beladen.

Handelt es sich bei den polyfunktionellen Verbindungen um ionische Verbindungen, so wird der Membranfilm z.B. mit

$$-SO_3^{\ominus}, -COO^{\ominus} \text{ und/oder } -\overset{\oplus}{N}R_3)\text{-Resten}$$

beladen.

Bevorzugt ist die Verwendung von ionischen, gegebenenfalls in Kombination mit nichtionischen

polyfunktionellen Verbindungen, die in der Regel zu Membranen mit gutem Durchfluß und gutem Rückhaltevermögen führen.

Andererseits kann man die polyfunktionellen Verbindungen, wenn sie z.B. hydrophil oder teilweise wasserlöslich sind, auch nur zur Vernetzung einsetzen. In der Regel sind die polyfunktionellen Verbindungen niedermolekular.

Der Vernetzungs- und (Beladungs)-schritt mit ionischen Gruppen enthaltenden Verbindungen kann vorzugsweise in wässrigem Medium ausgeführt werden und unterscheidet sich daher von den üblichen Vernetzungen bei Kompositmembranen (UF/RO-Membranen). Wasserlösliche polyfunktionelle Verbindungen führen zu den besten Ergebnissen.

Bevorzugte polyfunktionelle Verbindungen sind ionische Triazinyl- oder Pyrimidylderivate, wie z.B. reaktive Azofarbstoffe mit diesen Resten als Reaktivgruppierung sowie mit Sulfo-($SO_3^{\ominus}$), Carboxyl-($COO^{\ominus}$-) und/oder Ammoniumgruppen. Farblose Verbindungen mit den gleichen Reaktivgruppierungen sind ebenfalls geeignet.

Die Vernetzung kann durch Bildung von chemischen Bindungen, elektrostatischen Wechselwirkungen zwischen ionischen Gruppen oder durch Komplexierung polymerer Funktionen mit Metallionen erfolgen. Alle drei Möglichkeiten der Vernetzung können nebeneinander vorliegen. Bevorzugt ist die Vernetzung unter Bildung chemischer Bindungen. Eine oder auch mehrere Komponenten, z.B. ein Reaktivfarbstoff und ein Metallsalz (Kupfersulfat) können zur Vernetzung eingesetzt werden.

Hydrophile polyfunktionelle (nichtionische und farblose) Verbindungen, sind z.B. Diepoxide, Aziridine, Anhydride und vorzugsweise cyclische Kohlensäureimidhalogenide (Cyanurchlorid, Tetrachlorpyrimidin), Dihalogenide von Dicarbonsäuren oder Dialdehyde. Die Säurehalogenide werden aus aprotischen Lösungsmitteln appliziert, während die übrigen polyfunktionellen Verbindungen aus wässrigem Medium unter Einhaltung bestimmter pH-Wert- und Temperaturbereiche appliziert werden können.

Die reaktiven Farbstoffe können verschiedenen Klassen angehören und sind z.B. Anthrachinon-, Formazan- oder Azofarbstoffe. Azofarbstoffe sind bevorzugt. Sie können gegebenenfalls auch als Metallkomplexe vorliegen.

Als Reaktivgruppen (z.B. in den Farbstoffen) seien die folgenden genannt: Carbonsäurehalogenidgruppen, Sulfonsäurehalogenidgruppen, Reste von α,β-ungesättigten Carbonsäuren oder Amiden, z.B. der Acryl-, Methacryl-, α-Chloracryl- oder α-Bromacrylsäure, Acrylamidreste, Reste vorzugsweise niedriger Halogenalkylcarbonsäuren, z.B. der Chloressigsäure, α,β-Dichlorpropionsäure oder α,β-Dibrompropionsäure; Reste von Fluorcyclobutancarbonsäuren, z.B. der Tri- oder Tetrafluorcyclobutancarbonsäure; Reste mit Vinylacylgruppen, z.B. Vinylsulfongruppen oder Carboxyvinylgruppen; Reste, die Äthylsulfonyl- ($-SO_2CH_2CH_2OSO_2OH$, $-SO_2CH_2CH_2C1$) oder Äthylaminosulfonylgruppen ($-SO_2NHCH_2CH_2OSO_2OH$) enthalten und halogenierte heterocyclische Reste, wie z.B. Reste von Dihalogenchinoxalinen, Dihalogenpyridazonen, Dihalogenphthalazinen, Halogenbenzthiazolen oder vorzugsweise halogenierte Pyrimidinen oder 1,3,5-Triazinen, wie z.B. von Monohalogentriazinen, Dihalogentriazinen, 2,4-Dihalogenpyrimidinen oder 2,5,6-Trihalogenpyrimidinen. Geeignete Halogenatome in den vorgenannten Resten sind Fluor-, Brom- und insbesondere Chloratome.

Beispielhaft seien die folgenden reaktiven Gruppen, aufgezählt: Monochlortriazinyl, Dichlortriazinyl, 2,4-Dichlorpyrimidyl, 2,3-Dichlorchinoaxalin-6-carbonyl, 4,5-Dichlorpyridazonpropionyl, 1,4-Dichlorphthalazin-6-carbonyl, Chlorbenzthiazol, das mit einem Farbstoffmolekül über –CONH–, $-SO_2NH-$, –NH–Ar–N=N– (Ar = Phenylen oder Naphthylen), verbunden ist, 5-Chlor-4-methyl-2-methylsulfonyl-pyrimidyl, Vinylsulfonyl, β-Sulfatoäthylsulfonyl, 4-Sulfatoäthylaminosulfonyl, β-Chloräthylsulfonyl oder β-Sulfatopropionamido.

Besonders bevorzugt als polyfunktionelle Verbindungen für die Vernetzung des auf dem Trägermaterial abgeschiedenen Membranfilms sind reaktive Azofarbstoffe, die Sulfonsäuregruppen ($-SO_3H$) oder Carboxylgruppen (–COOH) enthalten, wobei diese auch in Salzform, z.B. in Form eines Alkalimetallsalzes (Natriumsalz) vorliegen können, und die als Reaktivgruppierungen Monochlortriazin-, Dichlortriazin-, 2,4-Dichlorpyrimidin-, Vinylsulfonyl-, β-Sulfatoäthylsulfonyl, β-Chloräthylsulfonyl- oder β-Sulfatoäthylaminosulfonylreste enthalten.

Als ionische Gruppen in dem die Membran modifizierenden Verbindungen (oder den Membranen selbst) kommen z.B. Sulfonsäure-, Sulfato- oder Carboxylgruppen ferner Ammoniumgruppen aus primären, sekundären, oder tertiären Aminen, quaternäre Ammoniumgruppen und auch Phosphonium- oder Sulfoniumgruppen in Betracht. Sulfonsäuregruppen als ionische Gruppen sind bevorzugt.

Besonders wertvoll und vielseitig sind die Membranen, in denen das Polymer mit einem sulfonsäuregruppenhaltigen Azofarbstoff vernetzt/beladen ist. Der Azofarbstoff kann auch komplexgebundenes Metall, z.B. Kupfer, enthalten.

Ferner ist es auch möglich, die geladenen Gruppen durch Umsatz von Reagenzien, wie Alkyl- oder Benzylhalogeniden, mit einer Aminofunktion der Polymerkette in die Membran einzuführen. Auf diese Weise kann z.B. der Polyäthyleniminrest mit Methyljodid oder Dimethylsulfat modifiziert werden. Andererseits kann auch direkt mit Chlorsulfonsäure modifiziert werden.

Die Vernetzung/Beladung mit den polyfunktionellen Verbindungen dient z.B. der Einführung von positiven oder negativen Ladungen (ionischen Gruppierungen) in die Membranoberfläche und/oder die Poren kann ein- oder zweistufig erfolgen.

Einstufig bedeutet, daß die die Ladungen tragende Verbindung und sogenannte Fixiermittel (z.B. Alkali) in einem Bad angewendet werden.

Im zweistufigen Verfahren hat man zunächst den Adsorptionsschritt der die Ladung tragenden Verbindung und dann in einer separaten Reaktionslösung den Fixierschritt (chemische Reaktion zwischen der z.B. dem Reaktivfarbstoff und der (modifizierten) Membran). Das zweistufige Verfahren ist bevorzugt, da einerseits die Konzentration der reaktiven Komponente in der Adsorptionslösung niedriger gehalten werden und eine solche Lösung gegebenenfalls mehrfach verwendet werden kann und andererseits die Gesamtreaktionszeit kürzer ist als im einstufigen Verfahren.

Im zweistufigen Verfahren kann die Konzentration eines Reaktivfarbstoffs in wässriger Lösung etwa 0,5 bis 3% betragen; die Adsorption wird z.B. bei Temperaturen von 20 bis 35°C während 2 bis 60 Minuten durchgeführt; der pH-Wert kann 4 bis 8 betragen. Die Fixierung kann dann in einer wäßrigen, auf einen pH-Wert von 9 bis 12 eingestellten Lösung durchgeführt werden, wobei die Reaktionszeit etwa 30 Minuten betragen kann. Die Einstellung des pH-Wertes erfolgt mit beliebigen organischen (Natriumcarbonat) oder organischen Basen.

Die Membranen können, je nach Verwendungszweck verschiedene Formen aufweisen, z.B. plattenförmig, blattförmig, röhrenförmig, in Form einer Tasche, eines Sacks, eines Konus oder als Hohlfasern vorliegen. Bei starker Druckbelastung können die Membranen natürlich durch Nonwoven-Träger, Träger aus textilen Geweben oder Papier, Drahtsiebe oder Lochplatten (Module) geschützt (verstärkt) werden. Innerhalb des weiter oben angegebenen Bereiches kann die Porengröße durch verschiedene Temperaturen variiert und ebenfalls dem jeweiligen Verwendungszweck angepaßt werden. So kann z.B. durch Tempern der Membranen vor oder nach ihrer chemischen Modifikation (50 bis 150°C) die Porengröße und damit der Durchfluß und das Rückhaltevermögen der Membranen verändern.

Die erfindungsgemäßen Membranen zeigen ein gutes Rückhaltevermögen im Bereich der angegebenen Temperaturen verbunden mit einem ausgezeichneten Durchfluß (Flux).

Zu erwähnen ist auch die gute Stabilität gegen Lösungsmittel, Temperatur (z.B. bis 70°C), Druck (z.B. im Bereich von 2 bis 100 bar, vorzugsweise im Bereich von 2 bis 50 bzw. 2 bis 30 bar) sowie gegen pH-Wert-Einflüsse (Bereich etwa 2 bis 12).

Insbesondere für die folgenden Anwendungen sind die erfindungsgemäßen Membranen vorteilhaft, wobei es sich im Prinzip stets um Trennungen einwertiger Ionen niedrigen Ionengewichts von mehrwertigen Ionen mit niedrigem oder höherem Ionengewicht und einwertigen Ionen mit höherem Ionengewicht, um Trennungen ionogener von nichtionogenen Substanzen oder von ionogenen Verbindungen unterschiedlichen Molekulargewichts oder entgegengesetzter Ladung handelt. Die Trennung erfolgt nach üblichen Methoden, z.B. indem man die zu trennende Flüssigkeit/Lösung auf einer Seite der Membran vorlegt und unter Anwendung eines hydraulischen Drucks, der größer ist als der osmotische Druck der Lösungen, die Lösung filtriert.

1. Die Trennung von organischen und auch metallorganischen ionogenen Substanzen von Nebenprodukten aus einer Reaktionsmischung und anderen Substanzen, welche darin enthalten sind, z.B. von Salzen, wie Natriumchlorid, Natriumsulfat oder Natriumacetat oder Säuren.

2. Die Trennung von Schwermetallkomplexen von solchen Salzen, welche keine Komplexe bilden (Behandlung von Abwässern).

3. Die Reinigung von Abwässern, welche bei der Produktion und Anwendung von Farbstoffen und optischen Aufhellern anfallen.

4. Die Trennung von ionogenen Molekülen von Wasser, d.h. die Konzentrierung von wässerigen Lösungen, welche Metallkomplexe, Tenside, Farbstoffe oder Proteine enthalten, wobei bessere Ergebnisse bezüglich des Wirkungsgrades (Durchfluß pro Zeiteinheit) und des Trenneffektes im Vergleich zu bekannten Membranen erzielt werden.

5. Die Trennung von geladenen und ungeladenen Verbindungen.

Die Ausbildung der dynamischen Membran (des dünnen Membranfilms) kann unter Druck auf Flachmembranen, röhrenförmigen Membranen oder Hohlfasern erfolgen. Die Zellen zur Durchführung des Verfahrens sind die gleichen wie diejenigen, die weiter unten beschrieben für den Membrantest eingesetzt werden. So verwendet man z.B. eine kreisförmige Flachmembran von 13 $cm^2$ Fläche, die sich auf einer Sinterscheibe aus rostfreiem Stahl befindet und in eine zylinderische Zelle aus rostfreiem Stahl eingesetzt ist. 150 ml einer verdünnten Polymerlösung (z.B. 0,1% PEI) werden auf die Membran in den Stahlzylinder gegeben und es wird mit Stickstoff ein Druck von 10 bar angelegt. Unter diesem Druck kommt es zu einem Durchfluß der Lösung durch die Membran und zur Abscheidung und Bildung einer Polyäthylenimin(PEI)-Schicht auf der Flachmembran.

Neben dieser Modifikation einer Flachmembran kann man auch röhrenförmige Membranen (z.B. 60 cm lang, mit einem äußeren Durchmesser von 1,4 cm) modifizieren, wobei man die Membran in eine perforierte Röhre aus rostfreiem Stahl einsetzt und unter Druck (von innen nach außen) eine verdünnte Lösung des Polymers über die Membranfläche verteilt. Weitere Einzelheiten über die röhrenförmige Anordnung ergeben sich aus dem folgenden Abschnitt, in dem die Prüfung der Membranen beschrieben wird.

Der Trenneffekt (das Rückhaltevermögen) der Membranen kann wie folgt gemessen werden: eine kreisförmige Membran von 13 $cm^2$ Fläche wird, auf einer Sinterscheibe aus rostfreiem Stahl ruhend, in eine zylindrische Zelle aus rostfreiem Stahl eingesetzt. 150 ml der (zu prüfenden) Lösung, die die zu prüfende Substanz in der Konzentration $c_1$ (g Substanz in g Lösung) enthält, wird auf die Membran im Stahlzylinder gegeben und mit Stickstoff einem Druck von 14 bar ausgesetzt. Die Lösung wird magnetisch gerührt. Die auf der Austrittsseite der Membran anfallende Flüssigkeit wird auf ihren Gehalt (Konzentration) $c_2$ an zu prüfender Substanz untersucht, indem ab Start des Experimentes 3 Muster von je 5 ml gezogen werden. Im allgemeinen ist die Durchflußmenge durch die Membran und die Zusammensetzung der 3 Muster konstant. Hieraus läßt sich das Rückhaltevermögen als

$$R = \frac{c_1 - c_2}{c_1} \cdot 100\ (\%)$$

berechnen. Als Durchflußmenge pro Flächen- und Zeiteinheit ergibt sich

$$D = V.F^{-1}.t^{-1}$$ V: Volumen
F: Membranfläche
t: Zeit

D wird zweckmäßig ausgedrückt in $m^3 \cdot m^{-2} \cdot d^{-1}$ ($m^3/m^2 \cdot d$), d.h. Anzahl Kubikmeter je Quadratmeter Membranfläche und Tag oder in $1m^{-2}h^{-1}$, ($1/m^2 \cdot h$), d.h. Liter pro Quadratmeter Membranfläche und Stunde.

Zusätzlich zu den Messungen an Flachmembranen werden auch Messungen mit röhrenförmigen Membranen von 60 cm Länge und einem äußeren Durchmesser von 1,4 cm durchgeführt. Diese röhrenförmigen Membranen werden dazu in ein perforiertes Rohr aus rostfreiem Stahl gebracht.

Das Ganze wird in ein Rohr aus Polycarbonat gebracht. Der Ausfluß der Membran befindet sich zwischen dieser äußeren Polycarbonatröhre und dem Stahlrohr. Die Flüssigkeitszugabe erfolgt als turbulent fließender Strom der Lösung unter Druck (30 bar). Die Fließgeschwindigkeit wird konstant bei etwa 10–15 Litern pro Minute gehalten. Die Berechnung des Rückhaltevermögens und des Durchflusses erfolgt auf die gleiche Weise wie für die Flachmembranen.

In den folgenden Beispielen werden die Farbstoffe und farblose Verbindungen der Formeln (101) bis (107) als polyfunktionelle Verbindungen zur Vernetzung und zur Einführung ionischer Gruppen verwendet. Die Farbstoffe der Formeln (108) bis (110) werden in Testlösungen verwendet.

Teile und Prozente in den nachfolgenden Beispielen beziehen sich – sofern nicht anders angegeben – auf das Gewicht.

(101)

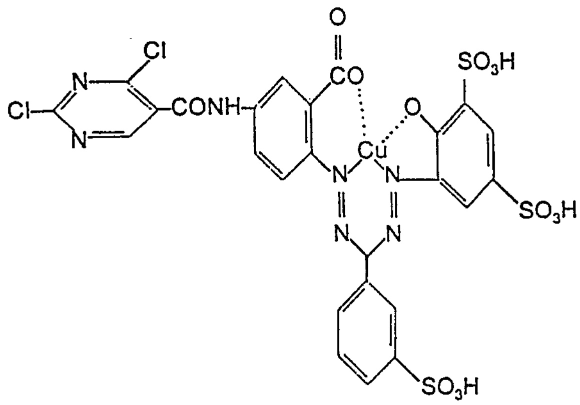

(102a)

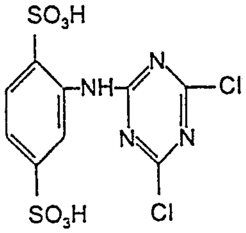

(102b)

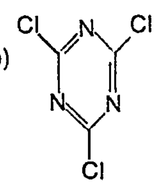

(102c)

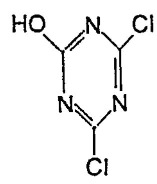

(102d)

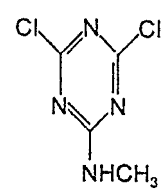

(103)

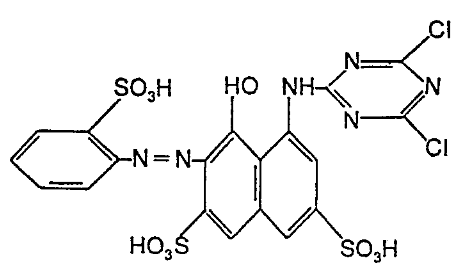

(104)

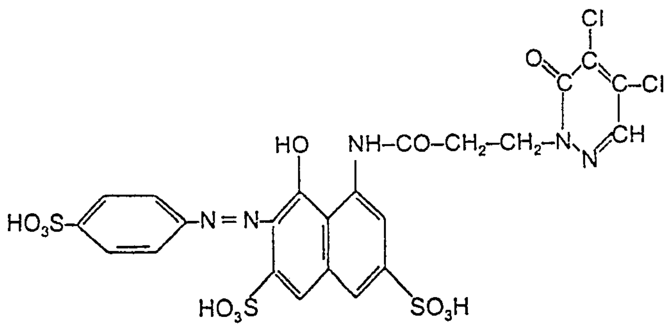

(105)

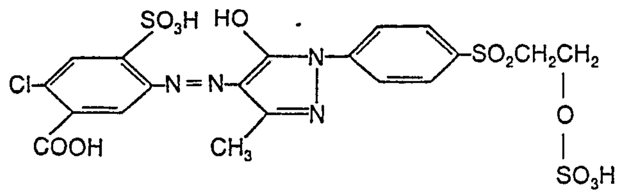

(106)

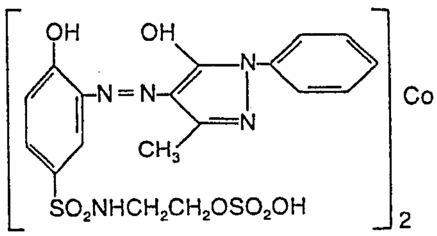

(107)

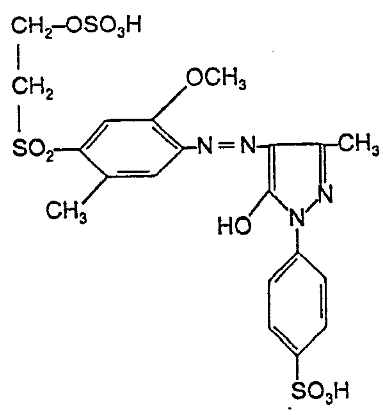

(108)

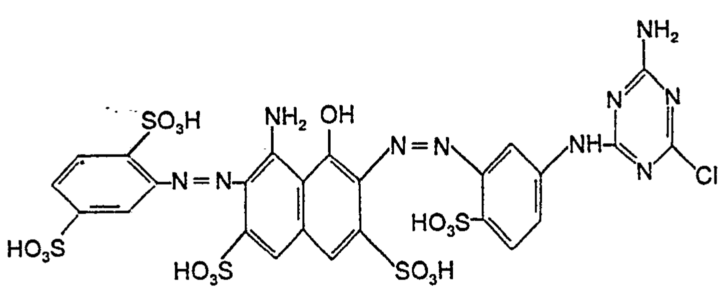

(109)

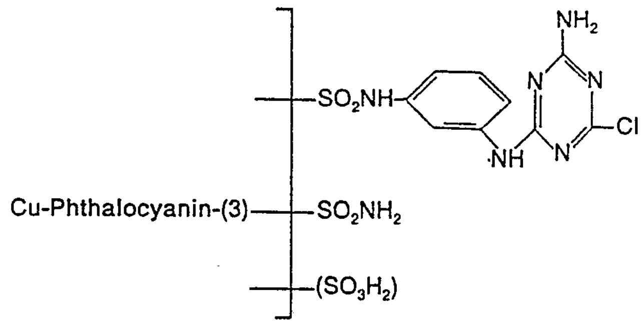

(110)

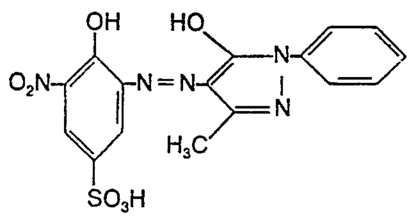

etwa ⅓

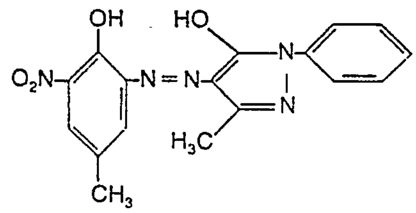

etwa ⅔

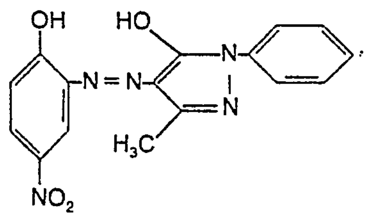

(2:1 Chromkomplex)

Beispiel A

Vor der Konzentrationspolarisation wird eine Polyacrylnitrilmembran wie folgt chemisch modifiziert:

(1) Behandlung der Membran während 5 Minuten bei 60 °C in einer wässrigen Lösung, die 10% Hydroxylamin-Hydrochlorid ($NH_2OH \cdot HCl$) und 7,5% Natriumcarbonat ($Na_2CO_3$) enthält.

(2) 15 Minuten Waschen bei Raumtemperatur.

(3) Reaktion der Membran während 10 Minuten bei 0 bis 4 °C in einer 2%igen wäßrigen Suspension von Cyanurchlorid (hergestellt durch Auflösen von 2 g Cyanurchlorid in 20 ml Aceton und Hinzufügen von 80 ml Wasser).

(4) Waschen in Eiswasser während 15 Minuten.

(5) Behandlung der Membran in einer 10%igen wässrigen Polyäthyleniminlösung (PEI) (M.G. 30 000) während 10 Minuten bei einem pH-Wert von 8,5; anschließend Waschen der so modifizierten Membran während 10 Minuten mit Leitungswasser.

(6) Auswaschen des überflüssigen Polyäthylenimins in einer Druckzelle, wobei 100 ml Wasser bei 20 bar durch die Membran gedrückt werden.

Beispiel 1

Durch eine Membran gemäß Beispiel (A) werden bei 5 °C in einer Druckzelle 20 ml einer wäßrigen Lösung, die 0,1% PEI (M.G. 30 000) und 0,3 mM/l Cyanurchlorid enthält, bei einem Druck von 20 bar gepreßt. Anschließend wird die Membran in einer wäßrigen Lösung, die 1% des Farbstoffs der Formel (101) und 10% Kochsalz während 15 Minuten und dann in einer 5%igen Natriumcarbonatlösung während 20 Minuten behandelt.

Die so erhaltene Membran wird dann in einer Druckzelle getestet. Die Ergebnisse sind in Tabelle II angegeben.

Ebenfalls gute Ergebnisse erhält man bei Verwendung der Verbindungen der Formeln (102) bis (107) als Vernetzungskomponenten.

Beispiel 2

Man wiederholt Beispiel 1 mit dem Unterschied, daß die PEI-Lösung 0,02%ig ist und 0,3 mM/l Cyanurchlorid enthält und bei Raumtemperatur gearbeitet wird.

Die Ergebnisse sind in Tabelle II angegeben.

Beispiel 3

Man wiederholt Beispiel 1 mit dem Unterschied, daß die PEI-Lösung 0,01%ig ist und 0,3 mM/l Cyanurchlorid enthält und bei 40 °C gearbeitet wird.

Die Ergebnisse sind in Tabelle II angegeben.

Tabelle II

| Beispiel | Vor der Modifikation Durchfluß ($H_2O$) $1/m^2 \cdot d$ | Nach der Modifikation Durchfluß | | Rückhaltevermögen | |
|---|---|---|---|---|---|
| | | Wasser $1/m^2 \cdot d$ | Farbstoff-lösung $1/m^2 \cdot d$ | Farbstoff % | NaCl % |
| 1 | 9600 | 7490 | 3360 | 99,4 | −12,5 |
| 2 | 3500 | – | 2700 | 99,9 | −21,0 |
| 3 | 5760 | 5100 | 2880 | 99,6 | − 5,1 |

Testbedingungen: Flachmembranen, 20 bar, Raumtemperatur; Farbstoff der Formel (108), Lösungen und einem Farbstoffgehalt von 15 000 ppm und 2% NaCl.

Beispiel 4

Eine Membran gemäß Beispiel (A), die nur gemäß Stufe (1) modifiziert ist, wird in einer Druckzelle gemäß Beispiel 1 modifiziert. Es wird eine 1%ige PEI-Lösung, die zusätzlich 0,3 mM/l Cyanurchlorid enthält verwendet. Es wird bei einem Druck von 10 bar gearbeitet und die Modifikation abgebrochen wenn 20 ml, 30 ml bzw. 40 ml Permeat durch die Membran durchgepreßt sind (Verwendung von 3 verschiedenen Ausgangsmembranen).

Die Ergebnisse sind in Tabelle III angegeben.

Tabelle III

| Permeat (ml) | Durchfluß $H_2O$ $1/m^2 \cdot D$ | Durchfluß Farbstofflösung $1/m^2 \cdot d$ | Rückhaltevermögen Farbstoff (%) | NaCl (%) |
|---|---|---|---|---|
| 20 | 13 800 | 2700 | 98,1 | −4,2 |
| 30 | 9 000 | 2000 | 98,5 | −20,0 |
| 40 | 9 800 | 2940 | 99,2 | −4,7 |

Testbedingungen wie in Tabelle II angegeben.

Beispiel 5

Beispiel 1 wird mit 60 cm langen röhrenförmigen Membranen wiederholt, wobei verschiedene Modifikationszeiten eingehalten werden. Die erhaltenen Ergebnisse sind in Tabelle IV angegeben.

Tabelle IV

| Membran Nr. | Zeit für die Modifikation (Minuten) | Durchfluß $(1/m^2 \cdot d)$ | Rückhaltevermögen Farbstoff (%) | NaCl (%) |
|---|---|---|---|---|
| 1 | 15 | 2800 | 98,9 | −31,0 |
| 2 | 30 | 2300 | 99,3 | −15,0 |
| 3 | 45 | 2100 | 98,6 | −17,0 |
| 4 | 60 | 2100 | 98,3 | −21,0 |

Testbedingungen wie in Tabelle III angegeben; die Farbstofflösung enthält jedoch 6% Farbstoff.

Beispiel 6

Eine Ultrafiltrationsmembran aus einem chlormethylierten Polysulfon (Molekulargewicht: 36 000), dessen wiederkehrende Einheiten der Formel

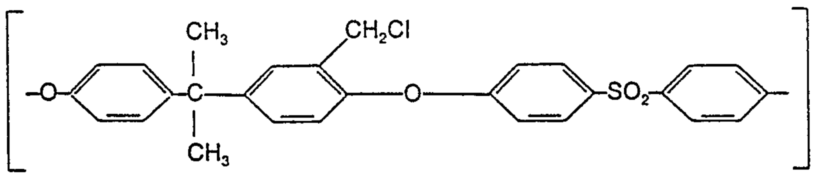

entsprechen und die ein Rückhaltevermögen gegenüber dem Farbstoff der Formel (108) (1,5%ige Lösung) von 85% aufweist, wird nach dem Verfahren gemäß Beispiel 1 (PEI-Cyanurchlorid-Farbstoff der Formel (101)) modifiziert.

Nach dieser Modifikation weist die Membran bei einem Durchfluß von 2842 $l/m^2 \cdot d$ ein Rückhaltevermögen von 99,2% für den Farbstoff der Formel (108) auf. Testbedingungen: 1,5%ige Lösung des Farbstoffs der Formel (108), 20 bar, Raumtemperatur.

Beispiel 7

Eine Ultrafiltrationsmembran aus Cellulosediacetat und einem Rückhaltevermögen gegenüber dem Farbstoff der Formel (108) (1,5%ige Lösung, 20 bar) von 78% wird in einer 2%igen wäßrigen Suspension von Cyanurchlorid bei einem pH-Wert von 10 während 30 Minuten behandelt, dann 30 Minuten mit Leitungswasser gewaschen und schließlich nach dem Verfahren gemäß Beispiel 6 chemisch modifiziert.

Nach dieser Modifikation weist die Membran bei einem Durchfluß von 1800 $l/m^2 \cdot d$ ein Rückhaltevermögen von 98% für den Farbstoff der Formel (108) auf. Testbedingungen wie in Beispiel 6 angegeben.

Beispiel 8

Eine Ultrafiltrationsmembran aus einem Polymer auf Epoxidbasis mit wiederkehrenden Einheiten der Formel

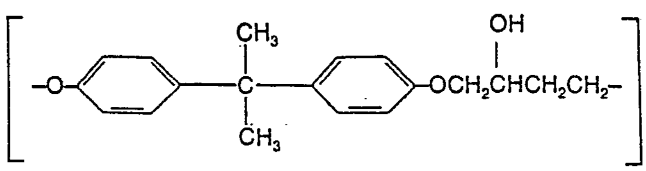

wird nach dem Verfahren gemäß Beispiel 7 modifiziert.

Durchfluß und Rückhaltevermögen gegenüber dem Testfarbstoff der Formel (108) vor und nach der Modifikation ergeben sich wie folgt:

| | | |
|---|---|---|
| Durchfluß: | 2360 $l/m^2 \cdot d$ | – 1800 $l/m^2 \cdot d$ |
| Rückhaltevermögen: | 91% | – 98,6% |

Testbedingungen wie in Beispiel 7 angegeben.

**Patentansprüche**

1. Verfahren zur Herstellung von dynamischen Membranen auf porösen, polymeren Trägermaterialien, dadurch gekennzeichnet, daß man

(a) auf den Trägermaterialien Polymere aus verdünnten wäßrigen Lösungen unter Druck abscheidet, wobei die Trägermaterialien und die Polymeren reaktive Gruppen enthalten, die miteinander reagieren können, und

(b) die schichtförmig auf dem Trägermaterial abgeschiedenen Polymeren mit polyfunktionellen niedermolekularen Verbindungen vernetzt.

2. Verfahren nach Anspruch 1, dadurch gekennzeichnet, daß man die Polymeren zusammen mit polyfunktionellen niedermolekularen, vorzugsweise nicht-ionischen Verbindungen aus den verdünnten Lösungen unter Druck abscheidet und die abgeschiedenen Polymeren gegebenenfalls zusätzlich vernetzt.

3. Verfahren nach einem der Ansprüche 1 oder 2, dadurch gekennzeichnet, daß man die Vernetzung (b) mit ionischen polyfunktionellen niedermolekularen Verbindungen durchführt.

4. Verfahren nach einem der Ansprüche 1 bis 3, dadurch gekennzeichnet, daß das polymere, reaktive Gruppen enthaltende Trägermaterial Cellulose, Cellulosederivate, Polymere auf Basis von Polyvinylalkohol oder Bisphenol-Epoxiaddukte enthält, die mit organischen Verbindungen modifiziert sind, die mindestens zwei funktionelle Gruppen enthalten.

5. Verfahren nach einem der Ansprüche 1 bis 3, dadurch gekennzeichnet, daß das polymere, reaktive Gruppen enthaltende Trägermaterial Polymere auf Basis von Polyacrylnitril enthält, die durch Umsetzung mit Hydroxylamin oder Hydroxylamin und Verbindungen mit mindestens zwei funktionellen Gruppen modifiziert sind.

6. Verfahren nach einem der Ansprüche 1 bis 3, dadurch gekennzeichnet, daß das reaktive Gruppen enthaltende Trägermaterial aromatische Polysulfone oder Polystyrole enthält und die reaktiven Gruppen vorzugsweise an die aromatischen Ringe dieser Polymeren gebunden sind.

7. Verfahren nach einem der Ansprüche 4 oder 5, dadurch gekennzeichnet, daß die Verbindungen mit mindestens zwei funktionellen Gruppen solche sind, die reaktive Doppelbindungen oder Epoxyd-, Aziridin-, Aldehyd-, Imidat-, Isocyanat-, Isothiocyanat-, Hydroxyl- oder Anhydridgruppen, als tertiäre Amine oder als Anionen abspaltbare Gruppen, wobei die abspaltbaren Anionen insbesondere Halogenide sind, oder eine Kombination dieser Gruppen enthalten.

8. Verfahren nach Anspruch 7, dadurch gekennzeichnet, daß die reaktiven Verbindungen cyclische Kohlensäureimidhalogenide, Isocyanate, Isothiocyanate oder N-Methylolverbindungen sind.

9. Verfahren nach Anspruch 8, dadurch gekennzeichnet, daß die reaktiven Verbindungen Halogendiazine oder -triazine mit mindestens zwei reaktiven Gruppen sind und gegebenenfalls ionische Gruppen enthalten.

10. Verfahren nach Anspruch 6, dadurch gekennzeichnet, daß die reaktiven Gruppen durch Haloalkylierung, insbesondere durch Chlormethylierung oder durch Kupplung von Diazoverbindungen, und gegebenenfalls weitere chemische Modifizierung, in die Polymeren eingeführt werden.

11. Verfahren nach einem der Ansprüche 1 bis 3, dadurch gekennzeichnet, daß die reaktive Gruppen enthaltenden Polymere aliphatische oder aromatische Polymere sind, die Amino-, Hydroxyl-, Epoxy- und/oder Thiolgruppen enthalten.

12. Verfahren nach Anspruch 11, dadurch gekennzeichnet, daß die reaktive Gruppen enthaltenden Polymeren Polyäthylenimine, Polyvinylalkohole, Cellulosederivate, Polyvinylamine, Polyvinylaniline, Polypiperidine, Polydiallylamine, aminomodifizierte Polyepihalogenydrine; Kondensationsprodukte aus Dicyandiamid, Amin(Ammonium)-Salzen und Formaldehyd, Kondensationsprodukte aus Diaminen und Polyanhydriden, aminoalkylierte Polysulfone, aminoalkylierte Polyphenylenoxyde oder Polyamido-polyamin-Epichlorhydrinharze sind.

13. Verfahren nach einem der Ansprüche 1 bis 12, dadurch gekennzeichnet, daß die polyfunktionellen niedermolekularen Verbindungen in Stufe (b) nicht-ionisch oder vorzugsweise ionisch sind und mindestens zwei reaktive Gruppen enthalten, die mit dem Polymeren und dem Trägermaterial reaktiv sind.

14. Verfahren nach Anspruch 13, dadurch gekennzeichnet, daß die polyfunktionelle Verbindung ein Azoreaktivfarbstoff ist, der als ionische Gruppen Sulfo-, Carboxyl- und/oder Ammoniumgruppen enthält.

15. Verfahren nach Anspruch 14, dadurch gekennzeichnet, daß der reaktive Azofarbstoff Sulfo- oder Carboxylgruppen und Monochlortriazinyl-, Dichlortriazinyl-, 2,4-Dichlorpyrimidyl-, Vinylsulfonyl-, β-Sulfatoäthylsulfonyl-, β-Chloräthylsulfonyl- oder β-Sulfatoäthylaminosulfonylreste enthält.

16. Verfahren nach Anspruch 13, dadurch gekennzeichnet, daß die polyfunktionellen niedermolekularen Verbindungen farblose und nichtionische cyclische Kohlensäureimidhalogenide, Dihalogenide von Dicarbonsäuren, Dialdehyde oder Trihalogenide von Tricarbonsäuren sind.

17. Verfahren nach Anspruch 13, dadurch gekennzeichnet, daß die polyfunktionellen niedermolekularen Verbindungen farblose Halogentriazine oder Halogenpyrimidine sind, die ionische Gruppen enthalten.

18. Verfahren nach Anspruch 2, dadurch gekennzeichnet, daß die polyfunktionellen niedermolekularen Verbindungen farblose und nichtionische cyclische Kohlensäureimidhalogenide, Dihalogenide von Dicarbonsäuren, Dialdehyde oder Trihalogenide von Tricarbonsäuren sind.

19. Verfahren nach einem der Ansprüche 1 bis 18, dadurch gekennzeichnet, daß die in Stufe (a) verwendeten verdünnten Polymerlösungen 0,01 bis 5 Gew.-%, vorzugsweise 0,01 bis 1 Gew.-% Polymer enthalten.

20. Verfahren nach einem der Ansprüche 1 bis 19, dadurch gekennzeichnet, daß der Druck, unter dem Stufe (a) durchgeführt wird, mindestens 2 bar, vorzugsweise 10 bis 100 bar beträgt.

21. Verwendung der Membranen, erhältlich gemäß dem Verfahren nach einem der Ansprüche 1 bis 20, in Ultrafiltrations- oder Umkehrosmose-Trenn-Verfahren.

22. Ultrafiltrations- oder Umkehrosmoseverfahren zur Konzentrierung und/oder Reinigung von Lösungen oder zur Trennung von gelösten Komponenten, dadurch gekennzeichnet, daß man die Lösungen auf einer Seite einer Membran, erhältlich gemäß dem Verfahren nach einem der Ansprüche 1 bis 20, vorlegt und unter Anwendung eines hydraulischen Drucks, der größer als der osmotische Druck der Lösungen ist, die Lösungen durch die Membran filtriert.

## Claims

1. A process for preparing dynamic membranes on porous support materials which comprises

(a) depositing polymers from a diluted aqueous solution on the support materials under pressure, whereby the carrier materials and the polymers contain reactive groups which can react with each other, and

(b) crosslinking the polymer deposited in layers on the support material with polyfunctional low molecular compounds.

2. The process of claim 1 wherein the polymers together with the polyfunctional low molecular compounds, preferably non-ionic compounds, are deposited from the diluted solutions under pressure and optionally followed by an additional crosslinking of the deposited polymers.

3. The process of claim 1 or 2, wherein the crosslinking (b) is carried out with ionic polyfunctional lower molecular compounds.

4. The process of any one of claims 1 to 3, wherein the polymeric support containing reactive groups contains cellulose, cellulose derivatives, polymers on basis of polyvinyl alcohol or bisphenol-epoxy-adducts which are modified with organic compounds containing at least two functional groups.

5. The process of any one of claims 1 to 3, wherein the polymeric support material containing reactive groups contains polymers on basis of polyacrylonitrile which have been modified by reaction with hydroxylamine or hydroxylamine and compounds containing at least two functional groups.

6. The process of any one of claims 1 to 3, wherein the support material containing reactive groups contains aromatic polysulfones or polystyrenes and the reactive groups optionally are linked to the aromatic rings of the polymers.

7. The process of any one of claims 4 or 5, wherein the compounds containing at least two functional groups are such compounds which contain reactive double bonds, or epoxide, aziridine, aldehyde, imidate, isocyanate, isothiocyanate, hydroxyl or anhydride groups, groups detachable as tertiary amines or as anions, whereby the detachable anions preferably are halides, or a combination of such groups.

8. The process of claim 7, wherein the reactive compounds are cyclic carbonic acid imide halides, isocyanates, isothiocyanates or N-methylol compounds.

9. The process of claim 8, wherein the reactive compounds are halodiazines or -triazines containing at least two reactive groups, and optionally ionic groups.

10. The process of claim 6, wherein the reactive groups are introduced into the polymers through haloalkylation, preferably chloro-methylation, or coupling with diazo compounds, and optionally by further chemical modification.

11. The process of any one of claims 1 to 3, wherein the polymers containing reactive groups are aliphatic or aromatic polymers containing amino, hydroxyl, epoxy and/or thiol groups.

12. The process of claim 11, wherein the polymers containing reactive groups are polyethyleneimines, polyvinyl alcohols, cellulose derivatives, polyvinylamines, polyvinylanilines, polypiperidines, polydiallylamines, amino modified polyepihalohydrins; condensation products of dicyandiamide, amino(ammonium) salts and formaldehyde; condensation products of diamines and polyanhydrides, aminoalkylated polysulfones, aminoalkylated polyphenylene oxides or polyamido-polyamine epichlorohydrin resins.

13. The process of any one of claims 1 to 12, wherein the polyfunctional low molecular compounds in step (b) are non-ionic or preferably ionic compounds containing at least two reactive groups which are reactive with the polymer and the support material.

14. The process of claim 13, wherein the polyfunctional compound is a reactive azo dye containing as ionic groups sulfonic acid groups, carboxyl groups and/or ammonium groups.

15. The process of claim 14, wherein the reactive azo dyestuff contains sulfonic acid or carboxyl groups and monochlorotriazinyl, dichlorotriazinyl, 2,4-dichloropyrimidinyl, vinyl sulfonyl, β-sulfatoethylsulfonyl, β-chloroethylsulfonyl or β-sulfatoethylaminosulfonyl radicals.

16. The process of claim 13, wherein the polyfunctional low molecular compounds are colourless non-ionic cyclic carbonic acid imide halides, dihalides of dicarboxylic acids, dialdehydes or trihalides of tricarboxylic acids.

17. The process of claim 13, wherein the polyfunctional low molecular compounds are colourless halotriazines or halopyrimidines containing ionic groups.

18. The process of claim 2, wherein the polyfunctional low molecular compounds are colourless and non-ionic cyclic carbonic acid imide halides, dihalides of dicarboxylic acids, dialdehydes or trihalides of tricarboxylic acids.

19. The process of any one of claims 1 to 18, wherein the diluted polymer solutions used in step (a) contain 0.01 to 5% by weight, preferably 0.01 to 1% by weight of the polymer.

20. The process of any one of claims 1 to 19, wherein the pressure applied in step (a) is at least 2 bar, preferable 10 to 100 bar.

21. Use of the membranes obtainable according to the process of any one of claims 1 to 20 in ultrafiltration or reverse osmosis separation processes.

22. An ultrafiltration or reverse osmosis process for concentrating and/or purifying solutions or separating dissolved components which comprises disposing the solutions on one side of a membrane obtainable according to the process of any one of claims 1 to 20, and filtering the solutions through the membrane by applying a hydraulic pressure being greater than the osmotic pressure of said solutions.

**Revendications**

1. Procédé de fabrication de membranes dynamiques à partir de matériaux ou matières de support polymères, caractérisé en ce que

a) sur les matières de support, on dépose des polymères sous pression au départ de solutions aqueuses diluées, où les matières de support et les polymères contiennent des radicaux réactifs qui peuvent réagir les uns sur les autres, et

b) on réticule les polymères déposés sous forme de couche sur la matière de support à l'aide de composés polyfonctionnels à bas poids moléculaires.

2. Procédé suivant la revendication 1, caractérisé en ce que l'on dépose les polymères ensemble avec les composés polyfonctionnels, à bas poids moléculaires, de préférence non ioniques, au départ des solutions diluées, sous pression et on réticule éventuellement complémentairement les polymères déposés.

3. Procédé suivant l'une des revendications 1 ou 2, caractérisé en ce que l'on réalise la réticulation (b) avec des composés polyfonctionnels, à bas poids moléculaires, ioniques.

4. Procédé suivant l'une des revendications 1 à 3, caractérisé en ce que la matière de support polymère, contenant des radicaux réactifs, contient de la cellulose, des dérivés de la cellulose,

des polymères à base d'alcool polyvinylique, ou des adducts de bisphénol-époxyde, qui sont modifiés avec des composés organique qui contiennent au moins deux radicaux fonctionnels.

5. Procédé suivant l'une des revendications 1 à 3, caractérisé en ce que la matière de support polymère, contenant des radicaux réactifs, contient des polymères à base de polyacrylonitrile, qui sont modifiés par réaction sur de l'hydroxylamine ou de l'hydroxylamine et des composés comportant au moins deux radicaux fonctionnels.

6. Procédé suivant l'une des revendications 1 à 3, caractérisé en ce que la matière de support contenant des radicaux réactifs contient des polystyrènes ou des polysulfones aromatiques et les radicaux réactifs sont liés, de préférence, à des noyaux aromatiques de ces polymères.

7. Procédé suivant l'une des revendications 4 ou 5, caractérisé en ce que les composés comportant au moins deux radicaux fonctionnels sont du genre de ceux qui contiennent des doubles liaisons réactives, ou des radicaux époxyde, aziridine, aldéhyde, imidate, isocyanate, isothiocyanate, hydroxyle ou anhydride, des radicaux séparables sous forme d'amines tertiaires ou sous forme d'anions, où les anions séparables sont plus particulièrement des halogénures, ou qui contiennent une combinaison de ces radicaux.

8. Procédé suivant la revendication 7, caractérisé en ce que les composés réactifs sont des imidohalogénures d'acides carboxyliques cycliques, des isocyanates, des isothiocyanates ou des composés N-méthylolés.

9. Procédé suivant la revendication 8, caractérisé en ce que les composés réactifs sont des halogénodiazines ou -triazines avec au moins deux radicaux réactifs et contiennent éventuellement des radicaux ioniques.

10. Procédé suivant la revendication 6, caractérisé en ce que les groupes réactifs sont introduits dans les polymères par haloalkylation, plus particulièrement par chlorométhylation, ou par copulation de composés diazoïques et, éventuellement, une modification chimique supplémentaire.

11. Procédé suivant l'une des revendications 1 à 3, caractérisé en ce que les polymères contenant des radicaux réactifs sont des polymères aliphatiques ou aromatiques qui contiennent des radicaux amino, hydroxyle, époxyde et/ou thiol.

12. Procédé suivant la revendication 11, caractérisé en ce que les polymères contenant des radicaux réactifs sont des polyéthylèneimines, des alcools polyvinyliques, des dérivés de la cellulose, des polyvinylamines, des polyvinylanilines, des polypipéridines, des polydiallylamines, des polyépihalogénhydrines aminomodifiées; des produits de condensation du dicyandiamide, de sels d'amines (ammonium) et du formaldéhyde, des produits de condensation de diamines et de polyanhydrides, des polysulfones aminoalkylées, des polyphénylénoxydes aminoalkylés ou des résines de polyamido-polyamine-épichlorhydrine.

13. Procédé suivant l'une des revendications 1 à 12, caractérisé en ce que les composés polyfonctionnels, à bas poids moléculaires, dont il est question dans l'étape (b) sont non ioniques ou, de préférence ioniques, et contiennent au moins deux radicaux réactifs qui sont réactifs avec le polymère et la matière de support.

14. Procédé suivant la revendication 13, caractérisé en ce que le composé polyfonctionnel est un colorant réactif azoïque qui contient des radicaux sulfo, carboxyle et/ou ammonium à titre de radicaux ioniques.

15. Procédé suivant la revendication 14, caractérisé en ce que le colorant réactif azoïque contient des radicaux sulfo ou carboxyle et des radicaux monochlorotriazinyle, dichlorotriazinyle, 2,4-dichloropyrimidyle, vinylsulfonyle, β-sulfatoéthylsulfonyle, β-chloréthylsulfonyle, ou β-sulfatoéthylaminosulfonyle.

16. Procédé suivant la revendication 13, caractérisé en ce que les composés polyfonctionnels, à bas poids moléculaires, sont des dialdéhydes ou des trihalogénures d'acides tricarboxyliques, des dihalogénures d'acides dicarboxyliques, ou des imidohalogénures d'acides carboxyliques cycliques, non ioniques et incolores.

17. Procédé suivant la revendication 13, caractérisé en ce que les composés polyfonctionnels, à bas poids moléculaires, sont des halogénopyrimidines ou des halogénotriazines, incolores, qui contiennent des radicaux ioniques.

18. Procédé suivant la revendication 2, caractérisé en ce que les composés polyfonctionnels, à bas poids moléculaires, sont des dialdéhydes ou des trihalogénures d'acides tricarboxyliques, des dihalogénures d'acides dicarboxyliques, ou des imidohalogénures d'acides carboxyliques cycliques, incolores et non ioniques.

19. Procédé suivant l'une des revendications 1 à 18, caractérisé en ce que les solutions de polymères diluées, utilisées pour la mise en œuvre de l'étape (a) contiennent de 0,01 à 5% en poids, de préférence de 0,01 à 1% en poids, de polymère.

20. Procédé suivant l'une des revendications 1 à 19, caractérisé en ce que la pression sous laquelle on entreprend la mise en œuvre de l'étape (a), atteint au moins 2 bars, de préférence 10 à 100 bars.

21. Utilisation des membranes pouvant être obtenues par mise en œuvre du procédé suivant l'une des revendications 1 à 20, dans un procédé de séparation par ultrafiltration ou par osmose inverse.

22. Procédé d'ultrafiltration ou d'osmose inverse en vue de la concentration et/ou de l'épuration de solutions ou en vue de la séparation de composants dissous, caractérisé en ce que l'on dispose les solutions d'un côté d'une membrane obtenue par mise en œuvre du procédé suivant l'une des revendications 1 à 20, et en ce que l'on filtre les solutions à travers la membrane en recourant à l'emploi d'une pression hydraulique qui est supérieure à la pression osmotique des solutions.